# EUROPÄISCHE PATENTANMELDUNG

(11) **EP 1 849 748 A2**
(43) Veröffentlichungstag der Anmeldung: **31.10.2007**
(21) Anmeldenummer: 07006972.9
(22) Anmeldetag: 03.04.2007
(51) Int. Cl.: C01B 3/34, C01B 3/38

(54) **Dampferzeugung in Dampfreformierungsprozessen**

(30) Priorität: 27.04.2006 DE 102006019699
(71) Anmelder: Linde Aktiengesellschaft, 65189 Wiesbaden (DE)
(72) Erfinder: Freitag, Christian, 80538 München (DE); Henes, Dino, 81479 München (DE); Innocenzi, Stefano, 80637 München (DE); Kandziora, Bernd, 82065 Baierbrunn (DE); Klein, Harald, Dr., 82515 Wolfratshausen (DE); Schwarzhuber, Josef, 85283 Wolnzach (DE)

(57) **Zusammenfassung**

Die Erfindung betrifft ein Verfahren zur Erzeugung von wenigstens zwei, unterschiedliche Reinheiten aufweisenden Arten von Wasserdampf in Dampfreformierungsprozessen, in welchen zumindest zwei Dampfreformierungseinrichtungen (Dampfreformer) (DR1, DR2) parallel betrieben werden, wobei die erste Wasserdampfart (Reindampf) (4) eine höhere Reinheit aufweist als die zweite Wasserdampfart (Schmutzdampf) (11), sowie eine Vorrichtung zur Durchführung des Verfahrens. Die parallel betriebenen Dampfreformer werden zu Gruppen von wenigstens zwei Dampfreformern (Gruppen) (DR1, DR2) zusammengefasst, innerhalb der die gesamte erzeugte Reindampfmenge (4) in einem der Dampfreformer (DR1) durch ausschließliche Verdampfung von entgastem und entmineralisiertem Wasser (Reinwasser) (2) und die gesamte erzeugte Schmutzdampfmenge in dem anderen Dampfreformer (DR2) oder den anderen Dampfreformern durch Verdampfung von entgastem, Verunreinigungen enthaltendem Wasser (Schmutzwasser) erzeugt wird, wobei das Schmutzwasser zumindest teilweise aus dem innerhalb einer Gruppe anfallenden, überwiegend aus Wasser bestehenden Kondensat (Prozesskondensat) (9, 10) gebildet wird.

## Beschreibung

Die Erfindung betrifft ein Verfahren zur Erzeugung von wenigstens zwei, unterschiedliche Reinheiten aufweisenden Arten von Wasserdampf in Dampfreformierungsprozessen, in welchen zumindest zwei Dampfreformierungseinrichtungen (Dampfreformer) parallel betrieben werden, wobei die erste Wasserdampfart (Reindampf) eine höhere Reinheit aufweist als die zweite Wasserdampfart (Schmutzdampf), sowie ein Vorrichtung zur Durchführung des Verfahrens.

In Dampfreformierungsprozessen werden Kohlenwasserstoffe enthaltende Einsätze, wie Erdgas, Leichtbenzin oder Naphtha, mit Wasserdampf vermischt und in Dampfreformern zu Synthesegas - einer Kohlenmonoxid (CO) und Wasserstoff (H₂) enthaltenden Gasmischung - umgesetzt. Aus dem Synthesegas werden durch Reinigung und Zerlegung in weiteren Prozessschritten Stoffe wie CO, H₂ oder Oxogas (eine definierte Mischung aus H₂ und CO) gewonnen und als Produkte abgegeben. Um die eingesetzten Kohlenwasserstoffe mit hohem Umwandlungsgrad umzusetzen, wird die Dampfreformierung in derartigen Prozessen gewöhnlich mit einem Wasserdampfüberschuss durchgeführt. Um das überschüssige Wasser zu entfernen, wird das auf diese Weise erzeugte Synthesegas bis unterhalb des Wasserdampftaupunktes abgekühlt, wodurch der Wasserdampf auskondensiert und ein sog. Prozesskondensat bildet, das zum überwiegenden Teil aus Wasser besteht und i.Allg. mit Verunreinigungen wie Methanol, Ammoniak, Kohlendioxid, Ameisensäure und Essigsäure beladen ist.

Nach dem Stand der Technik wird das Prozesskondensat mit entmineralisiertem Wasser, das dem Prozess gewöhnlich von außen zugeführt wird, gemischt. Das so gebildete Mischwasser wird anschließend entgast und gegen im Dampfreformierungsprozess abzukühlende oder abkühlbare Stoffströme verdampft. Nach Überhitzung des Dampfes gegen abkühlbare Abgase, wird ein Teil des Dampfes (Prozessdampf) prozessintern eingesetzt, während der verbleibende Rest (Exportdampf) nicht innerhalb des Dampfreformierungsprozesses, sondern in einem externen Prozess genutzt wird. Die Erzeugung von Exportdampf ermöglicht es, im Dampfreformierungsprozess nicht verwertbare Wärme zu nutzen und die Wirtschaftlichkeit des Dampfreformierungsprozesses zu steigern.

Oft sind die Ansprüche der Abnehmer an die Qualität des Exportdampfes so hoch, dass sie von einem auf die oben beschriebene Weise erzeugten Exportdampf nicht erfüllt werden können. So darf beispielsweise die elektrische Leitfähigkeit von Exportdampf, der in einer Kondensationsturbine genutzt werden soll, nicht größer als 0,2µS/cm sein, ein Wert, der aufgrund der im Prozesskondensat enthaltenen Verunreinigungen jedoch häufig überschritten wird. Um auch in solchen Fällen nicht auf die Produktion von Exportdampf verzichten zu müssen, existieren Verfahren, die vorsehen das Prozesskondensat zu reinigen, bevor es mit entmineralisiertem Wasser gemischt wird.

Zur Reinigung des Prozesskondensats sind Verfahren bekannt, in denen die unerwünschten Stoffe durch Strippung in Strippkolonnen abgetrennt werden. Als Strippgas werden hierbei Luft oder Kohlenwasserstoffe enthaltende Stoffströme (z. B. Erdgas) eingesetzt.

In anderen Verfahren wird das Prozesskondensat entspannt und anschließend mittels Niederdruck-Wasserdampf, Luft oder Stickstoff in einer Waschkolonne entgast. Die Verunreinigungen werden dabei zusammen mit dem Reinigungsmedium ins freie abgeführt. Um auch hohen Anforderungen an die Reinheit des erzeugten Dampfes genügen zu können, sehen diese Verfahren einen weiteren Reinigungsschritt durch lonenaustausch in entsprechenden Reaktoren vor.

Um nach dem Stand der Technik in einem Dampfreformierungsprozess Exportdampf mit hoher Reinheit zu erzeugen, ist ein erheblicher apparativer (Stripperkolonnen, Ionenaustauscher) und damit auch finanzieller Aufwand nötig. Darüber hinaus verringert sich u. U. die Menge an Exportdampf, da die für die Reinigung benötigte Energie nicht mehr zurück gewonnen werden kann.

Werden in einem Dampfreformierungsprozess mehrere Dampfreformer parallel betrieben, so sind diese Dampfreformer nach dem Stand der Technik oftmals alle mit Dampferzeugungseinrichtungen ausgestattet, in denen sowohl Prozess- als auch Exportdampf erzeugt werden, wodurch die Wirtschaftlichkeit der in einer derartigen Anlage durchgeführten Dampfreformierung erheblich beeinträchtigt wird. Besonders gilt dies, wenn Exportdampf hoher Reinheit erzeugt werden soll, da dann der oben beschriebene große technische und betriebliche Aufwand für jeden der Dampfreformer betrieben werden muss.

Aufgabe der vorliegenden Erfindung ist es daher, ein Verfahren der eingangs genannten Art sowie eine Vorrichtung zur Durchführung des Verfahrens anzugeben, die es erlauben, Wasserdampf mit hoher Reinheit, aber ohne die Nachteile des Standes der Technik zu erzeugen.

Diese Aufgabe wird verfahrensseitig erfindungsgemäß dadurch gelöst, dass die parallel betriebenen Dampfreformer zu Gruppen von wenigstens zwei Dampfreformern (Gruppen) zusammengefasst werden, innerhalb der die gesamte erzeugte Reindampfmenge in einem der Dampfreformer durch ausschließliche Verdampfung von entgastem und entmineralisiertem Wasser (Reinwasser) und die gesamte erzeugte Schmutzdampfmenge in dem anderen Dampfreformer oder den anderen Dampfreformern durch Verdampfung von entgastem, Verunreinigungen enthaltendem Wasser (Schmutzwasser) erzeugt wird, wobei das Schmutzwasser zumindest teilweise aus dem innerhalb einer Gruppe anfallenden, überwiegend aus Wasser bestehenden Kondensat (Prozesskondensat) gebildet wird.

Der zur Erzeugung von Reindampf bestimmte Anteil des Reinwassers sowie der Reindampf selbst, werden im Dampfreformierungsprozess nicht mit anderen Stoffströmen vermischt, insbesondere nicht mit Schmutzwasser oder Schmutzdampf. Die Reinheit des Reindampfes wird somit ausschließlich durch die Reinheit des Reinwassers bestimmt. Zweckmäßiger Weise wird das Reinwasser aus Trinkwasser oder aus einem anderen, nur geringe Mengen an Verunreinigungen aufweisenden Wasser in Wasseraufbereitungsprozessen hergestellt, wie sie aus dem Stand der Technik hinlänglich bekannt sind.

Um eine hohe Wirtschaftlichkeit des Dampfreformierungsprozesses zu erreichen, wird angestrebt, den gesamten in einer Gruppe erzeugten Reindampf als sog. Exportdampf einer Nutzung außerhalb des Dampfreformierungsprozesses zuzuführen. In Abhängigkeit von den Betriebsverhältnissen innerhalb einer Gruppe, kann es allerdings notwendig sein, einen Teil der Reindampfmenge innerhalb der Gruppe zu nutzen. Eine Ausgestaltung des erfindungsgemäßen Verfahrens sieht daher vor, dass der innerhalb einer Gruppe erzeugte Reindampf in einen ersten und einen zweiten Reindampfstrom aufgeteilt wird, wobei der erste Reindampfstrom (Exportdampf) einer Nutzung außerhalb des Dampfreformierungsprozesses zugeführt wird, während der zweite Reindampfstrom (Make-up-Dampf) vollständig innerhalb der Gruppe genutzt wird.

Das erfindungsgemäße Verfahren weiterbildend, wird vorgeschlagen, dass der Make-up-Dampf als Prozessdampf im Dampfreformierungsprozess verwendet wird, wozu er zweckmäßigerweise mit Schmutzdampf gemischt und wenigstens einem der Dampfreformer der Gruppe als Prozessdampf zugeführt wird. Bevorzugt wird der Make-up-Dampf ausschließlich dem zur Erzeugung von Reindampf eingesetzten Dampfreformer als Prozessdampf zugeführt.

Eine Ausgestaltung des erfindungsgemäßen Verfahrens sieht vor, dass das Schmutzwasser aus dem innerhalb einer Gruppe anfallenden Prozesskondensat besteht oder aus dem innerhalb einer Gruppe anfallenden Prozesskondensat und Reinwasser durch Mischung erzeugt wird. Bevorzugt werden Prozesskondensat und Reinwasser gemischt, die dabei entstehende Flüssigkeitsmischung durch Erhitzung verdampft und der so erzeugte Dampfstrom - gegebenenfalls nach Überhitzung - als Schmutzdampf weitergeführt. Eine andere bevorzugte Ausgestaltung des erfindungsgemäßen Verfahrens sieht vor, dass Prozesskondensat und Reinwasser getrennt in die Dampfphase überführt werden. Die so erzeugten Dampfströme werden anschließend zusammengeführt und - gegebenenfalls nach Überhitzung - als Schmutzdampf weitergeleitet.

Nicht immer sind die Anforderungen an die Reinheit des Exportdampfes so hoch, dass er ausschließlich aus Reindampf gewonnen werden müsste. Oft genügt auch die Reinheit, wie sie der innerhalb einer Gruppe erzeugte Schmutzdampf aufweist. Eine zweckmäßige Variante des erfindungsgemäßen Verfahrens sieht daher vor, dass zumindest ein Teil des in einer Gruppe erzeugten Schmutzdampfes exportiert und einer Nutzung außerhalb des Dampfreformierungsprozesses zugeführt wird.

Die Anforderungen an den Druck des Exportdampfes sind häufig nicht identisch mit den Anforderungen an den Druck des Prozessdampfes. Daher sieht eine andere Variante des erfindungsgemäßen Verfahrens vor, dass Schmutzdampf, aus welchem Prozessdampf erzeugt wird, und Reindampf, aus dem Exportdampf erzeugt wird, innerhalb einer Gruppe mit gleichen oder unterschiedlichen Drücken erzeugt werden.

Die Überhitzung eines aus einem Wasser enthaltenden Stoffstrom (Rein- oder Schmutzwasser) erzeugten Dampfes (Rein- oder Schmutzdampf) und/oder die Verdampfung eines Wasser enthaltenden Stoffstromes, erfolgt erfindungsgemäß durch indirekten Wärmetausch mit im Dampfreformierungsprozess abzukühlenden und/oder abkühlbaren Stoffströmen. Unter "abzukühlenden Stoffströmen" sind dabei solche Stoffströme zu verstehen, die im Dampfreformierungsprozess abgekühlt werden müssen, um die gewünschten Produkte zu erhalten. Ein Beispiel für einen solchen Stoffstrom ist ein Synthesegasstrom, der heiß aus einem Dampfreformer austritt und kalt in eine Zerlegungseinrichtung eingeleitet werden muss. Unter "abkühlbaren Stoffströmen" sind Stoffströme zu verstehen, die, z. B. aus Gründen einer besseren Energienutzung, abgekühlt werden können, deren Nichtabkühlung jedoch keinen Einfluss auf die Menge und die Qualität der herzustellenden Produkte hat. Ein Beispiel für einen derartigen Stoffstrom ist das heiße, aus einem Dampfreformer abströmende Abgas.

Die Erfindung betrifft ferner eine Vorrichtung zur Erzeugung von wenigstens zwei, unterschiedliche Reinheiten aufweisenden Arten von Wasserdampf in zumindest zwei parallel betriebenen Dampfreformierungseinrichtungen (Dampfreformern), wobei die erste Wasserdampfart (Reindampf) eine höhere Reinheit aufweist als die zweite Wasserdampfart (Schmutzdampf).

Vorrichtungsseitig wird die gestellte Aufgabe erfindungsgemäß dadurch gelöst, dass die parallel betriebenen Dampfreformer zu Gruppen von wenigstens zwei Dampfreformern (Gruppen) zusammengefasst sind, innerhalb der jeweils einem Dampfreformer ausschließlich entgastes und entmineralisiertes Wasser (Reinwasser) zur Erzeugung der gesamten Reindampfmenge und dem anderen Dampfreformer oder den anderen Dampfreformern entgastes, Verunreinigungen enthaltendes Wasser (Schmutzwasser) zu Erzeugung der gesamten Schmutzdampfmenge zuführbar ist, wobei das Schmutzwasser zumindest teilweise aus dem innerhalb einer Gruppe anfallenden, überwiegend aus Wasser bestehenden Kondensat (Prozesskondensat) gebildet wird.

Eine bevorzugte Ausgestaltung der erfindungsgemäßen Vorrichtung sieht vor, dass jeder der Dampfreformer einer Gruppe mit genau einerEinrichtung zur Dampferzeugung ausgestattet ist.

Zweckmäßigerweise umfasst eine Einrichtungen zur Dampferzeugung Wärmetauscher, über welche abzukühlenden und/oder abkühlbaren Stoffströmen Wärme im indirekten Wärmetausch entziehbar und auf aus einem Wasser enthaltenden Stoffstrom (Rein- oder Schmutzwasser) erzeugten Dampf (Rein- oder Schmutzdampf) und/oder auf einen Wasser enthaltenden Stoffstrom übertragbar ist.

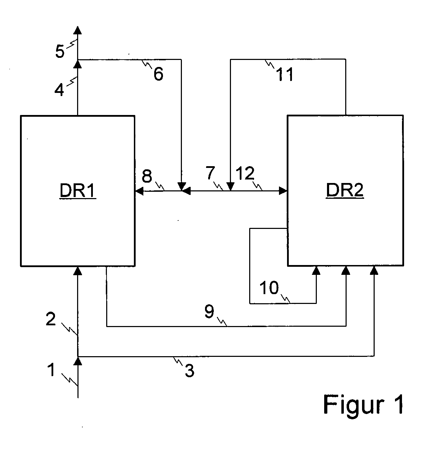

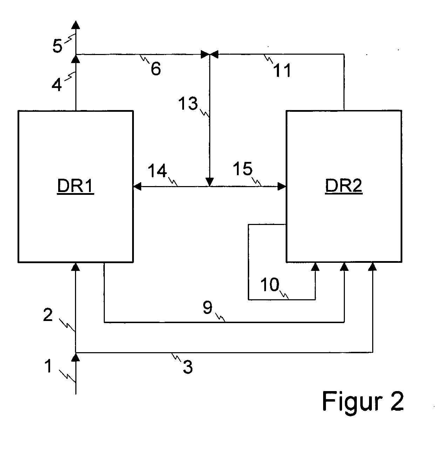

Im Folgenden soll die Erfindung anhand zweier, in den Figuren 1 und 2 schematisch dargestellter Ausführungsbeispiele, bei denen zwei Dampfreformer parallel angeordnet sind, näher erläutert werden. Die beiden Ausführungsbeispiele, in denen gleiche Anlagenteile mit gleichen Symbolen gekennzeichnet sind, unterscheiden sich lediglich in der Art Erzeugung des Prozessdampfes für die in den beiden Dampfreformern ablaufenden Dampfreformierungsprozessen.

In dem in Figur 1 dargestellten Ausführungsbeispiel wird dem Dampfreformierungsprozess über Leitung 1 entgastes und entmineralisiertes Wasser (Reinwasser) zugeleitet. Über Leitung 2 strömt ein Teil des Reinwasserstromes dem Dampfreformer DR1 zu, während ein anderer Teil über Leitung 3 dem Dampfreformer DR2 zugeführt wird. Der Reinwasserstrom 2 wird als ausschließlicher Einsatzstoff in die Dampferzeugüngseinrichtung des Dampfreformers DR1 (nicht dargestellt) eingeleitet, dort in Reindampf umgesetzt und über Leitung 4 aus dem Dampfreformer DR1 geführt. Die überwiegende Menge des Reindampfes 4, der den Reinheitsanforderungen eines Kondensationsturbinenprozesses genügt, wird als Exportdampf über Leitung 5 aus dem Dampfreformierungsprozess herausgeführt und einer externen Verwendung zugeführt. Der verbleibende Rest des Reindampfes wird über Leitung 6 weitergeleitet, mit über Leitung 7 aus dem Dampfreformer DR2 herangeführtem Schmutzdampf gemischt und als Prozessdampf über Leitung 8 in den Dampfreformer DR1 zurück geleitet. Im Dampfreformer DR1 anfallendes Prozesskondensat wird über Leitung 9 dem Dampfreformer DR2 zugeführt, gemeinsam mit dem dort anfallenden Prozesskondensat 10 und dem über Leitung 3 herangeführten Reinwasser der Dampferzeugungseinrichtung des Dampfreformers DR2 (nicht dargestellt) als Einsatz aufgegeben und zu Schmutzdampf umgesetzt. Der Schmutzdampf wird über Leitung 11 aus dem Dampfreformer DR2 geleitet und in zwei Teilströme 7 und 12 aufgeteilt, wovon der eine 7 zum Dampfreformer DR1 geführt wird, während der zweite über Leitung 12 als Prozessdampf in den Dampfreformer DR2 eingeleitet wird.

In dem in Figur 2 dargestellten Ausführungsbeispiel wird ein Teil des im Dampfreformer DR1 erzeugten Reindampfes 4 über Leitung 6 abgezweigt und mit dem gesamten, über Leitung 11 aus dem Dampfreformer DR2 herangeführten Schmutzdampf in der Leitung 13 gemischt. Die so erzeugte Mischung wird anschließend aufgeteilt und als Prozessdampf über die Leitungen 14 und 15 den Dampfreformern DR1 und DR2 zugeleitet.

## Patentansprüche

1. Verfahren zur Erzeugung von wenigstens zwei, unterschiedliche Reinheiten aufweisenden Arten von Wasserdampf in Dampfreformierungsprozessen, in welchen zumindest zwei Dampfreformierungseinrichtungen (Dampfreformer) parallel betrieben werden, wobei die erste Wasserdampfart (Reindampf) eine höhere Reinheit aufweist als die zweite Wasserdampfart (Schmutzdampf), **dadurch gekennzeichnet, dass** die parallel betriebenen Dampfreformer zu Gruppen von wenigstens zwei Dampfreformern (Gruppen) zusammengefasst werden, innerhalb der die gesamte erzeugte Reindampfmenge in einem der Dampfreformer durch ausschließliche Verdampfung von entgastem und entmineralisiertem Wasser (Reinwasser) und die gesamte erzeugte Schmutzdampfmenge in dem anderen Dampfreformer oder den anderen Dampfreformern durch Verdampfung von entgastem, Verunreinigungen enthaltendem Wasser (Schmutzwasser) erzeugt wird, wobei das Schmutzwasser zumindest teilweise aus dem innerhalb einer Gruppe anfallenden, überwiegend aus Wasser bestehenden Kondensat (Prozesskondensat) gebildet wird.

2. Verfahren nach Anspruch 1, **dadurch gekennzeichnet, dass** der innerhalb einer Gruppe erzeugte Reindampf in einen ersten und einen zweiten Reindampfstrom aufgeteilt wird, wobei der erste Reindampfstrom (Exportdampf) einer Nutzung außerhalb des Dampfreformierungsprozesses zugeführt wird, während der zweite Reindampfstrom (Make-up-Dampf) vollständig innerhalb der Gruppe genutzt wird.

3. Verfahren nach Anspruch 2, **dadurch gekennzeichnet, dass** der Make-up-Dampf als Prozessdampf im Dampfreformierungsprozess verwendet wird, wozu er bevorzugt mit Schmutzdampf gemischt und wenigstens einem der Dampfreformer der Gruppe als Prozessdampf zugeführt wird.

4. Verfahren nach Anspruch 3, **dadurch gekennzeichnet, dass** der Make-up-Dampf ausschließlich dem zur Erzeugung von Reindampf eingesetzten Dampfreformer als Prozessdampf zugeführt wird.

5. Verfahren nach einem der Ansprüche 1 bis 4, **dadurch gekennzeichnet, dass** innerhalb einer Gruppe Schmutzwasser durch die Mischung des gesamten anfallenden Prozesskondensats mit Reinwasser hergestellt wird.

6. Verfahren nach einem der Ansprüche 1 bis 5, **dadurch gekennzeichnet, dass** zumindest ein Teil des in einer Gruppe erzeugten Schmutzdampfes einer Nutzung außerhalb des Dampfreformierungsprozesses zugeführt wird.

7. Verfahren nach einem der Ansprüche 1 bis 5, **dadurch gekennzeichnet, dass** Schmutzdampf und Reindampf innerhalb einer Gruppe mit gleichen oder unterschiedlichen Drücken erzeugt werden.

8. Vorrichtung zur Erzeugung von wenigstens zwei, unterschiedliche Reinheiten aufweisenden Arten von Wasserdampf in zumindest zwei parallel betriebenen Dampfreformierungseinrichtungen (Dampfreformern), wobei die erste Wasserdampfart (Reindampf) eine höhere Reinheit aufweist als die zweite Wasserdampfart (Schmutzdampf), **dadurch gekennzeichnet, dass** die parallel betriebenen Dampfreformer zu Gruppen von wenigstens zwei Dampfreformern (Gruppen) zusammengefasst sind, innerhalb der jeweils einem Dampfreformer ausschließlich entgastes und entmineralisiertes Wasser (Reinwasser) zur Erzeugung der gesamten Reindampfmenge und dem anderen Dampfreformer oder den anderen Dampfreformern entgastes, Verunreinigungen enthaltendes Wasser (Schmutzwasser) zu Erzeugung der gesamten Schmutzdampfmenge zuführbar ist, wobei das Schmutzwasser zumindest teilweise aus dem innerhalb einer Gruppe anfallenden, überwiegend aus Wasser bestehenden Kondensat (Prozesskondensat) gebildet wird.

9. Vorrichtung nach Anspruch 8, **dadurch gekennzeichnet, dass** jeder der Dampfreformer einer Gruppe mit genau einer Einrichtung zur Dampferzeugung ausgestattet ist.

10. Vorrichtung nach Anspruch 9, **dadurch gekennzeichnet, dass** die Einrichtungen zur Dampferzeugung Wärmetauscher umfassen, über welche abzukühlenden und/oder abkühlbaren Stoffströmen Wärme im indirekten Wärmetausch entziehbar und auf aus einem Wasser enthaltenden Stoffstrom (Rein- oder Schmutzwasser) erzeugten Dampf (Rein- oder Schmutzdampf) und/oder auf einen Wasser enthaltenden Stoffstrom übertragbar ist.
